# EUROPEAN PATENT SPECIFICATION

(11) **EP 2 456 280 B1**
(45) Date of publication and mention of the grant of the patent: **24.08.2016**
(21) Application number: 11771600.1
(22) Date of filing: 23.04.2011
(51) Int. Cl.: H04M 1/725, H04W 4/00, H04W 88/02, G06K 19/07, G06K 19/077, H04L 29/06, H04B 1/38, H04W 88/00, G06F 13/40, G06F 13/38, G06F 13/42

(54) **WIRELESS INTERNET MODULE, USER TERMINAL AND WIRELESS COMMUNICATION METHOD**
DRAHTLOSES INTERNETMODUL, BENUTZERENDGERÄT UND DRAHTLOSES KOMMUNIKATIONSVERFAHREN
MODULE INTERNET SANS FIL, TERMINAL UTILISATEUR ET PROCÉDÉ DE COMMUNICATION SANS FIL

(30) Priority: 23.04.2010 CN 201010154212
(43) Date of publication of application: 23.05.2012
(73) Proprietor: Huawei Device Co., Ltd., Shenzhen, Guangdong 518129 (CN)
(72) Inventor: YANG, Meiwen, Shenzhen Guangdong Province 518129 (CN); GAO, Keqiang, Shenzhen Guangdong Province 518129 (CN)
(74) Representative: Thun, Clemens
(86) International application number: PCT/CN2011/073216
(87) International publication number: WO 2011/131147

(56) References cited:
- EP-A2- 1 615 135
- WO-A2-03/039108
- WO-A2-2007/066285
- CN-A- 101 420 757
- CN-A- 101 686 269
- CN-A- 101 686 269
- CN-A- 101 835 282
- CN-Y- 201 355 841
- CN-Y- 201 355 841
- US-A1- 2003 128 272
- US-A1- 2004 210 715
- US-A1- 2007 073 937
- Fujitsu Siemens Computers: "CONNECT2AIRGPRS Compact Flash CardFor Pocket LOOX - Data Sheet", , 1 May 2004 (2004-05-01), pages 1-2, XP002680897, Retrieved from the Internet: URL:http://stomach.v2.nl/docs/Hardware/Dat aSheets/GPRS/ds_gprs_cf__card.pdf [retrieved on 2012-07-27]

## Description

### FIELD OF THE INVENTION

The present invention relates to wireless communication technologies, and in particular, to a wireless Internet module, a User Equipment (UE), and a wireless communication method.

### BACKGROUND OF THE INVENTION

With development of wireless data services, wireless Internet modules prevail due to considerable uplink and downlink rates, simplicity, and convenience. A wireless Internet module is generally connected to a Personal Computer (PC) through an independent interface. Because an interface of a PC is generally located on the mainboard, the wireless Internet module needs to be set on the mainboard of the PC. An independent interface may be a Universal Serial Bus (USB) stick interface, an express card interface, a mini PCI-E interface, or a Personal Computer Memory Card International Association (PCMIA) interface.

Document US2007/0073937 discloses transmitting a digital image stored in the memory storage array of a removable media card to a host (e.g., accessible via a local area network (LAN), wide area network (WAN), or network of networks such as the Internet) via a wireless radio transceiver included in the media card.

Document WO2007/066285 discloses a memory device comprising a main memory for storing data, an antenna for receiving wireless communications, a radio module connected to the antenna, a power supply for supplying power to the radio module and indicating means connected to the radio module.

Document US2003/0128272A1 is related to a wireless digital camera media. This document discloses a wireless digital media card being provided for use in a digital camera. The wireless digital media card is configured to replace a conventional digital media card and include an interface to the digital camera, a transceiver configured to transmit image data over a wireless communication link and logic configured to receive image data from the digital camera via the interface and provide the image data to the transceiver for transmission.

Document "CONNECT2AIR GPRS Compact Flash Card For Pocket LOOX", 1 May 2004 (2004-05-01), pages 1-2, Retrieved from the Internet: URL: http://stomach.v2.nl/docs/Hardware/DataSheets/GPRS/ds_prs_cf_card.pdf, discloses a CF memory card wireless Internet module.

Document EP1615135A2 discloses that one of the client devices comprises an SD card slot and SD card containing an SDIO function. The SD card containing the SDIO function may also have another function, for example, a large memory. Client device #1 may be the SD memory, and client device #2 may be the SDIO. Client device #3 may be a multi-media memory, MMC.

Document US2004/0210715A1 is related to a memory card. This document discloses that a memory card of one published standard, such as the Multi-Media Card (MMC) or Secure Digital Card (SD), is modified to include the function of a Subscriber Identity Module (SIM) according to another published standard. The controller of the memory card communicates between electrical contacts on the outside of the card and both the memory and the SIM.

### SUMMARY OF THE INVENTION

Embodiments of the present invention provide a wireless Internet module, a UE, and a wireless communication method to reduce the space occupied by the wireless Internet module and to diversify UEs capable of Internet access. In one aspect a wireless communication method is provided, comprising:
receiving, by a wireless Internet module configured to establish a wireless connection to the Internet, Multiplex, MUX, data information, wherein the MUX data information, including at least one of a transmission control command and a transmission network packet, is sent by a User Equipment, UE, through a Secure Digital Memory Card, SD card, interface;
determining, by the wireless Internet module, whether the MUX data information contains the transmission control command and/or the transmission network packet;
when it is determined that the MUX data information contains the transmission control command, sending, by the wireless Internet module, the transmission control command through a transmission control command interface adapted to interface with a unit adapted to execute a command for control of transmission; and
when it is determined that the MUX data information contains the transmission network packet, sending, by the wireless Internet module, the transmission network packet through a transmission network packet interface adapted to interface with a network.

In another aspect a wireless Internet module is provided configured to perform the above mentioned wireless communication method.

In a further embodiment a User Equipment (UE) is provided, wherein
the UE comprises the above mentioned wireless Internet module.

A wireless Internet module, a UE, and a wireless communication method are provided herein. The wireless Internet processing submodule in the wireless Internet module exchanges information with the UE through the SD card interface submodule. The wireless Internet module uses the SD card interface submodule of the SD card to implement communication between the UE and the module. Therefore, all UEs that support the SD card interface submodule of the SD card can perform wireless network communication, and the functions of wireless Internet access and data storage can be implemented by using the SD card space in wireless mode. A UE provided in an embodiment of the present invention includes the wireless Internet module described above. The wireless Internet module occupies
only the space required by the SD card, which enables developers to design smaller UEs and more diversified UEs capable of Internet access.

### BRIEF DESCRIPTION OF THE DRAWINGS

FIG. 1 shows a structure of a wireless Internet module 100 according to an embodiment of the present invention;
FIG. 2 shows a wireless Internet processing submodule 102 in a wireless Internet module 100 according to an embodiment of the present invention;
FIG. 3, shows a structure of a wireless Internet module 100 according to an embodiment of the present invention;
FIG. 4 shows a structure of UE according to an embodiment of the present invention;
FIG. 5 is a flowchart of a wireless communication method according to an embodiment of the present invention;
FIG. 6 is a flowchart of another wireless communication method according to an embodiment of the present invention;
FIG. 7 shows a structure of a wireless Internet module according to an embodiment of the present invention;
FIG. 8 shows a structure of a UE according to an embodiment of the present invention;
FIG. 9 shows a signal flow between a wireless Internet module and a corresponding UE in an embodiment of the present invention;
FIG. 10 shows a structure of a packet transmitted on a Serial Peripheral Interface (SPI) or a Secure Digital Input and Output (SDIO) bus in an embodiment of the present invention; and
FIG. 11 shows an SD card according to an embodiment of the present invention.

### DETAILED DESCRIPTION OF THE EMBODIMENTS

The following describes a wireless Internet module, a UE, and a wireless communication method provided herein with reference to the accompanying drawings.

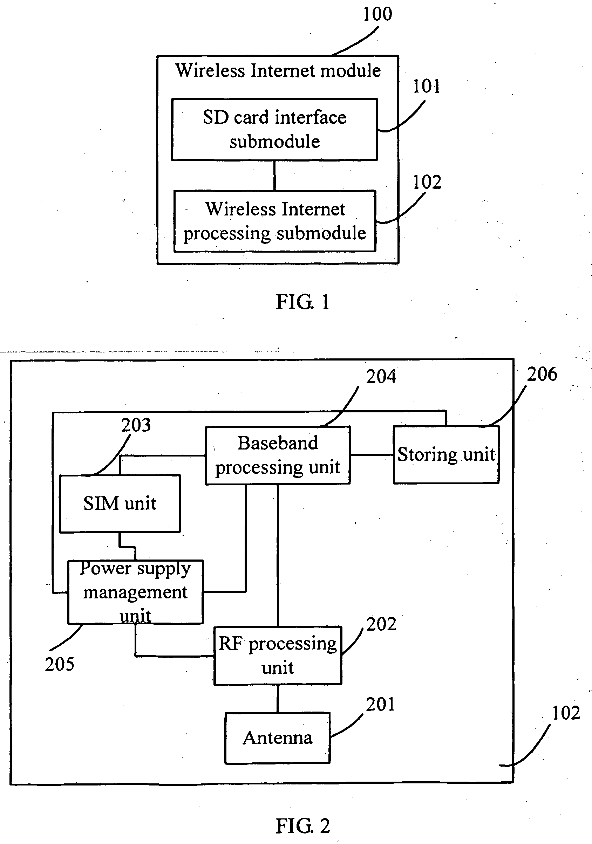

FIG. 1 shows a structure of a wireless Internet module 100 according to an embodiment of the present invention. The module includes an SD card interface submodule 101 and a wireless Internet processing submodule 102, where the wireless Internet processing submodule 102 exchanges information with the UE through the SD card interface submodule 101.

The wireless Internet module 100 can be inserted into the UE through an SD card slot or a Micro Secure Digital Memory Card (MicroSD) slot to establish a wireless connection. With the UE, the user can access the Internet through a wireless network, for example, send a photo through the wireless network.

The SD card interface submodule includes an SDIO interface submodule or an SPI submodule. The SDIO interface submodule corresponds to an SD bus communication mode; and the SPI submodule corresponds to an SPI bus communication mode. The SD card interface submodule is an SD card interface. The SDIO interface submodule is an SDIO interface and the SPI submodule is an SPI serial interface.

The appearance of the wireless Internet module 100 is the same as the appearance of the SD card. For example, the size of the wireless Internet module 100 may be the size of the SD card (24 mm × 32 mm × 2.1 mm). Both the SDIO interface submodule and the SPI submodule may be understood as interfaces of the SD card. The information exchanged by the wireless Internet processing submodule 102 and the UE through the SD card interface submodule 101 may include wireless data traffic information and a driver. The wireless data traffic information may include: a transmission network packet and a transmission control command obtained affer a radio signal received through the antenna are processed by a Radio Frequency (RF) processing unit and a baseband processing unit. The driver includes a MUX driver.

FIG. 2 shows a wireless Internet processing submodule 102 in a wireless Internet module according to an embodiment of the present invention. The wireless Internet processing submodule 102 includes an antenna 201, an RF processing unit 202, a Subscriber Identity Module (SIM) unit 203, and a baseband processing unit 204.

The antenna 201 is configured to transmit received radio signal to the RF processing unit 202, or convert the signal transmitted by the RF processing unit 202 into a electromagnetic wave and send the electromagnetic wave.

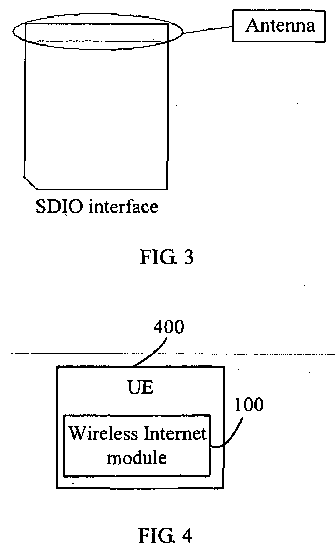

It should be noted that the antenna 201 may be set in the mainboard of the wireless Internet module. As shown in FIG 3, the SD card interface submodule 101 is located on a side of the wireless Internet module and the antenna 201 is located on the other side of the wireless Internet module, namely, the antenna 201 and the SD card interface are located on two different sides of the wireless Internet module. Alternatively, the antenna may be an external antenna which is connected to the RF processing unit through a mainboard contact of the wireless Internet module.

It should be noted that an area may be reserved around the antenna, and that no component is allowed to be set in this area.

The RF processing unit 202 is configured to perform frequency selection, amplification, and down-conversion on the radio signal received by the antenna 201, convert the radio signal into a intermediate frequency signal or a baseband signal, and send the signal to the baseband processing unit; or the RF processing unit 202 is configured to perform up-conversion and appropriate amplification on the baseband signal or intermediate frequency signal sent by the baseband processing unit 204, and send the signal through the antenna 201.

The SIM unit 203 is configured to store user parameter information. The user parameter information may include information about the digital mobile phone user and an encryption key, through which the network authenticates the identity of the user and encrypts the voice information generated in the conversation of the user.

It should be noted that the SIM unit may be a chip packed with SIM dies.

The baseband processing unit 204 is configured to process received intermediate frequency signal or baseband signal according to the parameter information obtained by the SIM unit 203, and requirements of the MUX driver and the wireless communication; or, receive the MUX data information, in which the data information is sent by the UE through the SD card interface submodule 101; identify the MUX data information; and send the data information through a transmission control command interface if the data information includes a transmission control command, or, send the data information through a transmission network packet interface if the data information includes a transmission network packet.

It should be noted that the wireless Internet processing submodule 102 may further include a power supply management unit 205 and a storing unit 206.

The power supply management unit 205 is configured to convert supply voltage of the UE into voltage required by the baseband processing unit 204, storing unit 206, RF processing unit 202, and SIM unit 203 to supply power to such units.

The storing unit 206 is configured to store the transmission network packet obtained by the baseband processing unit 204 and an application required for running the wireless Internet module.

The storing unit 206 may be configured to store a running program of the wireless Internet module; or, the storing unit 206 may serve two purposes: (1) serve as storage space for storing an external file, like an SD card; and (2) store the running program of the wireless Internet module.

As shown in FIG. 4, a UE 400 provided in an embodiment of the present invention includes the wireless Internet module 100 described above. For more details, see the description about the wireless Internet module 100 above.

The wireless Internet module may be set in an SD card slot of the UE, or in a MicroSD card slot.

It should be noted that: Because the wireless Internet module employs an SDIO interface or SPI interface of the SD card, and the appearance of the wireless Internet module is the same as the appearance of the SD card or MicroSD card, the wireless Internet module can be integrated in any portable apparatus that has an SD card interface, for example, a digital camera, a Personal Digital Assistant (PDA), and a multimedia player. In this way, the wireless Internet is applied in a wider field.

It should be noted that the wireless Internet module may be based on, but without being limited to 3rd-generation (3G) standards such as Wideband Code Division Multiple Access (WCDMA), Time Division-Synchronous Code Division Multiple Access (TD-SCDMA), Code Division Multiple Access (CDMA), and Worldwide Interoperability for Microwave Access (WiMAX); and 4G standards.

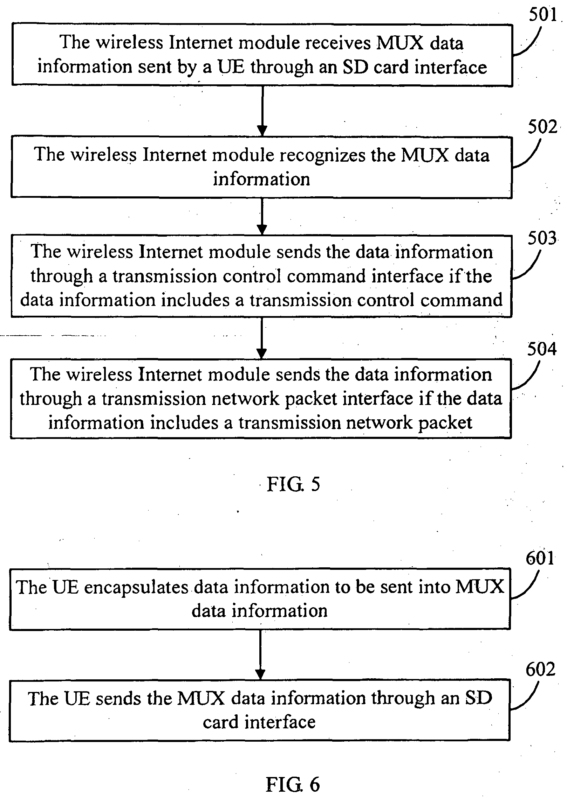

FIG. 5 shows a wireless communication method according to an embodiment of the present invention. The method includes the following steps:
501. The wireless Internet module receives MUX data information, in which the data information is sent by a UE through an SD card interface.
502. The wireless Internet module identifies the MUX data information.
503. The wireless Internet module sends the data information through a transmission control command interface if the data information includes a transmission control command.
504. The wireless Internet module sends the data information through a transmission network packet interface if the data information includes a transmission network packet.

It should be noted that the method further includes:
The wireless Internet module receives a wireless digital signal, which is a intermediate frequency signal or a baseband signal sent by the RF processing unit.

The wireless Internet module encapsulates the wireless digital signal into MUX data information.

The wireless Internet module sends the MUX data information to the UE. Specifically, the baseband processing unit 204 in the wireless Internet module lets the RF processing unit 202 process the MUX data information. The processed data information is sent to the antenna 201, and is finally sent out from the antenna 201.

FIG. 6 shows another wireless communication method according to an embodiment of the present invention. The method includes the following steps:
601. The UE encapsulates data information to be sent into MUX data information.
602. The UE sends the MUX data information through an SD card interface.

It should be noted that the method further includes:
The UE receives the MUX data information, in which the data information is sent by a wireless Internet submodule through the SD card interface.

The UE identifies the MUX data information.

The UE sends the data information through a transmission control command interface if the data information includes a transmission control command.

The UE sends the data information through a transmission network packet interface if the data information includes a transmission network packet.

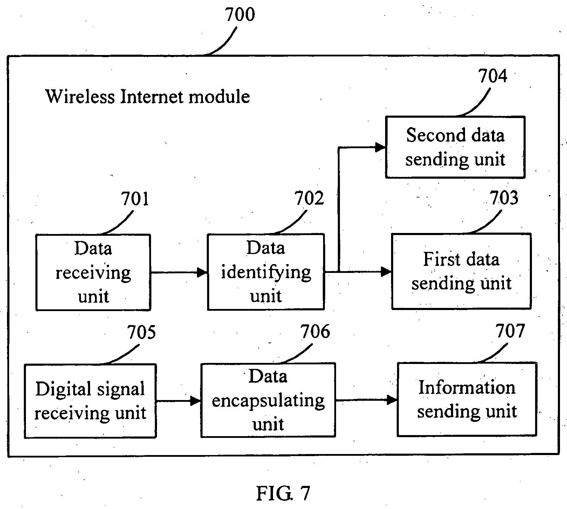

FIG. 7 shows a structure of a wireless Internet module 700 according to an embodiment of the present invention. The module includes:
a data receiving unit 701, configured to receive MUX data information, in which the data information is sent by a UE through an SD card interface;
a data identifying unit 702, configured to identify the MUX data information;
a first data sending unit 703, configured to send the data information through a transmission control command interface if the data information includes a transmission control command; and
a second data sending unit 704, configured to send the data information through a transmission network packet interface if the data information includes a transmission network packet.

It should be noted that the wireless Internet module 700 further includes:
a digital signal receiving unit 705, configured to receive a wireless digital signal;
a data encapsulating unit 706, configured to encapsulate the wireless digital signal into MUX data information; and
an information sending unit 707, configured to send the MUX data information to the UE.

It should be noted that the data receiving unit 701, data identifying unit 702, first data sending unit 703, second data sending unit 704, digital signal receiving unit 705, data encapsulating unit 706, and information sending unit 707 can be set in the baseband processing unit.

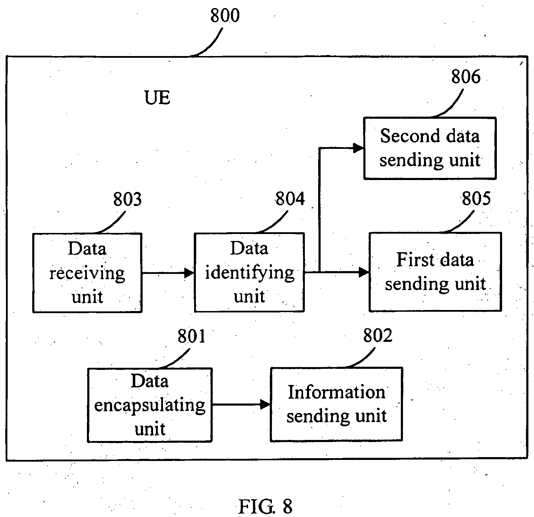

FIG. 8 shows a UE 800 according to an embodiment of the present invention. The UE includes:
a data encapsulating unit 801, configured to encapsulate data information to be sent into MUX data information; and
an information sending unit 802, configured to send the MUX data information through an SD card interface.

It should be noted that the UE further includes:
a data receiving unit 803, configured to receive the MUX data information, in which the data information is sent by a wireless Internet submodule through the SD card interface;
a data identifying unit 804, configured to identify the MUX data information;
a first data sending unit 805, configured to send the data information through a transmission control command interface if the data information includes a transmission control command; and
a second data sending unit 806, configured to send the data information through a transmission network packet interface if the data information includes a transmission network packet.

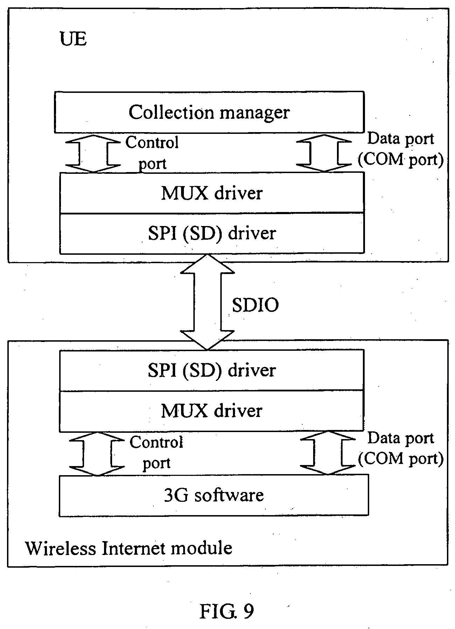

Based on the embodiments above, assuming the SPI bus (or SD bus) communication mode is configured for the wireless Internet module for 3G communication. As shown in FIG 9, a MUX driver is configured for the UE and the wireless Internet module. The storing unit in the wireless Internet module may be configured to store an application, the SPI (or SD) driver, MUX driver, and 3G software. In this way, the 3G software in the wireless Internet module can exchange information with the UE through the transmission control command interface and transmission network packet interface that are provided by the MUX driver. The information exchange includes two processes. The first process is: The UE sends data information to the wireless Internet module; and the second process is: The wireless Internet module sends data information to the UE.

### Process 1:

Before the UE sends data information to the wireless Internet module, the MUX driver encapsulates data information to be sent into MUX data information. The encapsulated MUX data information is sent to the UE through an SPI (or SD) bus. The data information includes at least one of: a transmission control command and a transmission network packet.

When the wireless Internet module receives the MUX data information, the wireless Internet module obtains the MUX data information from the SPI (or SD) bus, and then the MUX driver identifies the MUX data information. The transmission control command in the MUX data information is sent to the corresponding processing unit through a transmission control command interface, and the transmission network packet in the MUX data information is sent to the corresponding processing unit through the transmission network packet interface.

### Process 2:

When the wireless Internet module sends data information to the UE, the wireless Internet module sends the data information received by the antenna to the RF processing unit, and the RF processing unit performs frequency selection, amplification, and down-conversion on the received data information, converts the data information into a intermediate frequency signal or a baseband signal, and sends the signal to the baseband processing unit. Afterward, the baseband processing unit encapsulates the intermediate frequency signal or baseband signal into MUX data information, and sends the MUX data information to the UE through an SPI (or SD) bus.

When the UE receives the MUX data information, the UE retrieves the MUX data information from the SPI (or SD) bus, and then the MUX driver identifies the MUX data information. The MUX driver sends the identified data to the transmission control command interface and the transmission network packet interface according to an information type. Finally, the data information is sent to a dashboard of the UE for processing. Two ports are provided by the MUX driver (the two ports are two COM ports in the Windows system, namely, a transmission control command interface and a transmission network packet interface). The transmission control command interface is used to transmit a control command to the MUX driver, and the transmission network packet interface is used to transmit a network packet to the MUX driver.

It should be noted that after receiving the data information from the transmission control command interface and the transmission network packet interface, the MUX driver sends the data information through an SPI (or SD) bus, where the network packet takes priority.

The UE may be a PC which does not include a wireless Internet module, a laptop computer, a digital camera, a digital video recorder, or a data card. The embodiments of the present invention are not limited to the types of the UE.

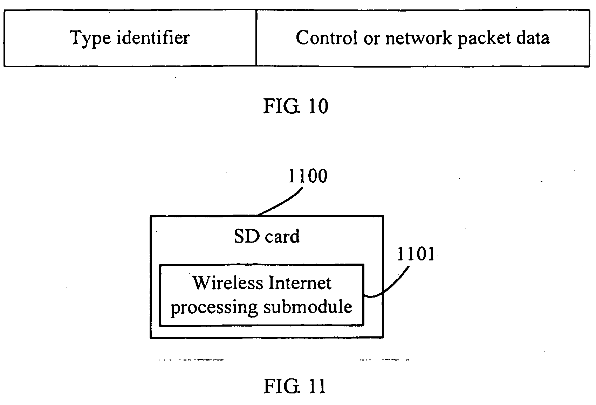

It should be noted that: The packets transmitted on the SPI (or SD) bus may be defined in the way shown in FIG. 10, for example, the identifier of the type of the control command is defined as 0, and the identifier of the type of the network packet is defined as 1.

When the MUX driver in the wireless Internet module receives data from the transmission control command interface (command port), the data is encapsulated into a packet whose type identifier is 0, and the data is sent to the UE through the SPI (or SD) bus. When the MUX driver in the wireless Internet module receives data from the transmission network packet interface (data port), the data is encapsulated into a packet whose type identifier is 1, and the data is sent to the UE through the SPI (or SD) port.

As shown in FIG. 11, an SD card 1100 provided in an embodiment of the present invention includes a wireless Internet processing submodule 1101, which exchanges information with a UE through an SD card interface. The SD card 1100 can be inserted into the UE through an SD card slot or a MicroSD card slot to establish a wireless connection. With the UE, the user can access the Internet through a wireless network, for example, send a photo through the wireless network.

The SD card may include: an SDIO interface and an SPI serial interface.

For more details of the wireless Internet submodule 1101, see the description about FIG. 2 above.

A wireless Internet module, a UE, and a wireless communication method are provided herein. The wireless Internet processing submodule in the wireless Internet module exchanges information with the UE through the SD card interface submodule. The appearance of the wireless Internet module is the same as the appearance of the SD card. The wireless Internet module uses the SD card interface submodule of the SD card to implement communication between the UE and the module. Therefore, all UEs that support the SD card interface submodule of the SD card can perform wireless network communication, and the functions of wireless Internet access and data storage can be implemented by using the existing SD card space in wireless mode.

A UE provided in an embodiment of the present invention includes a wireless Internet module mentioned above. The wireless Internet module occupies only the space required by the SD card, which enables developers to design smaller UEs and more diversified UEs capable of Internet access, and improves the user experience.

Persons of ordinary skill in the art should understand that all or part of the steps of the method specified in any embodiment above may be implemented by a program instructing relevant hardware. The program may be stored in computer-readable storage media such as a Read Only Memory/Random Access Memory (ROM/RAM), a magnetic disk, or a Compact Disk-Read Only Memory (CD-ROM). When the program runs, the program executes the steps of the method specified in any embodiment above.

The above descriptions are merely exemplary embodiments of the present invention, but not intended to limit the scope of the present invention. Any modifications, variations or replacements that can be easily derived by those skilled in the art shall fall within the scope of the present invention. Therefore, the scope of the present invention is subject to the appended claims.

## Claims

1. A wireless communication method, comprising:
receiving, by a wireless Internet module configured to establish a wireless connection to the Internet, Multiplex, MUX, data information, wherein the MUX data information, including at least one of a transmission control command and a transmission network packet, is sent by a User Equipment, UE, through a Secure Digital Memory Card, SD card, interface (step 501);
determining, by the wireless Internet module, whether the MUX data information contains the transmission control command and/or the transmission network packet;
when it is determined that the MUX data information contains the transmission control command, sending, by the wireless Internet module, the transmission control command through a transmission control command interface adapted to interface with a unit adapted to execute a command for control of transmission (step 503); and
when it is determined that the MUX data information contains the transmission network packet, sending, by the wireless Internet module, the transmission network packet through a transmission network packet interface adapted to interface with a network (step 504).

2. The wireless communication method according to claim 1, further comprising:
receiving, by the wireless Internet module, a wireless digital signal;
encapsulating, by the wireless Internet module, the wireless digital signal into MUX data information; and
sending, by the wireless Internet module, the MUX data information to the UE.

3. A wireless Internet module (100), configured to perform a wireless communication method according to any one of claims 1-2.

4. The wireless Internet module (100) according to claim 3, comprising:
a Secure Digital Memory Card, SD card, interface submodule (101) and a wireless Internet processing submodule (102), wherein the wireless Internet processing submodule (102) is configured to exchange information with the User Equipment, UE, through the SD card interface submodule (101) being the SD card interface;
the wireless Internet processing submodule (102) comprises an antenna (201), a Radio Frequency,RF, processing unit (202), a Subscriber Identity Module,SIM, unit (203), and a baseband processing unit (204);
wherein the antenna (201) is configured to transmit a received radio signal to the RF processing unit (202), or convert a signal transmitted by the RF processing unit (202) into a electromagnetic wave and send the electromagnetic wave;
the RF processing unit (202) is configured to perform frequency selection, amplification, and down-conversion on the radio signal received by the antenna (201), thereby converting the radio signal into a baseband signal, and send the signal to the baseband processing unit (204); or the RF processing unit (202) is configured to perform up-conversion and amplification on a baseband signal sent by the baseband processing unit (204), and send the signal through the antenna (201);
the SIM unit (203) is configured to store user parameter information;
wherein
the baseband processing unit (204) is configured to perform the method according to claim 1.

5. The wireless Internet module (100) according to claim 4, wherein:
a size of the wireless Internet module (100) is the same as a size of an SD card.

6. The wireless Internet module (100) according to claim 4, wherein the wireless Internet processing submodule (102) further comprises:
a storing unit (206), configured to store the transmission network packet obtained by the baseband processing unit (204) and an application required for running the wireless Internet module (100).

7. The wireless Internet module (100) according to claim 6, wherein the wireless Internet processing submodule (102) further comprises:
a power supply management unit (205), configured to convert supply voltage of the UE into voltage required by the baseband processing unit (204), storing unit (206), RF processing unit (202), and SIM unit (203) to supply power to such units.

8. The wireless Internet module (100) according to claim 4, wherein:
the antenna (201) is set in a mainboard of the wireless Internet module (100), or the antenna (201) is connected to the RF processing unit (202) through a mainboard contact of the wireless Internet module (100).

9. The wireless Internet module (100) according to any one of claims 4 to 8, wherein:
the SD card interface submodule (101) comprises: a Secure Digital Input and Output,SDIO, interface submodule or a Serial Peripheral Interface, SPI, submodule.

10. A User Equipment,UE, wherein
the UE comprises the wireless Internet module according to any one of claims 3 to 9.

11. The UE according to claim 10, wherein:
the wireless Internet module (100) is set in a Secure Digital Memory Card, SD card, slot of the UE, or in a Micro Secure Digital Memory Card, MicroSD, slot.

## Patentansprüche

1. Drahtloses Kommunikationsverfahren, das Folgendes umfasst:
Empfangen durch ein drahtloses Internetmodul, das konfiguriert ist, eine drahtlose Verbindung mit dem Internet aufzubauen, von Multiplex-Dateninformationen, MUX-Dateninformationen, wobei die MUX-Dateninformationen, die einen Sendesteuerbefehl und/oder ein Sendenetzpaket enthalten, durch ein Anwendergerät, UE, über eine Schnittstelle einer sicheren digitalen Speicherkarte, SD-Karten-Schnittstelle, gesendet werden (Schritt 501);
Bestimmen durch das drahtlose Internetmodul, ob die MUX-Dateninformationen den Sendesteuerbefehl und/oder das Sendenetzpaket enthalten;
wenn bestimmt wird, dass die MUX-Dateninformationen den Sendesteuerbefehl enthalten, Senden durch das drahtlose Internetmodul des Sendesteuerbefehls über eine Sendesteuerbefehlsschnittstelle, die ausgelegt ist, mit einer Einheit zu verbinden, die ausgelegt ist, einen Befehl zum Steuern des Sendens auszuführen (Schritt 503); und
wenn bestimmt wird, dass die MUX-Dateninformationen das Sendenetzpaket enthalten, Senden durch das drahtlose Internetmodul des Sendenetzpakets über eine Sendenetzpaketschnittstelle, die ausgelegt ist, mit einem Netz zu verbinden (Schritt 504).

2. Drahtloses Kommunikationsverfahren nach Anspruch 1, das ferner Folgendes umfasst:
Empfangen durch das drahtlose Internetmodul eines drahtlosen digitalen Signals;
Einkapseln durch das drahtlose Internetmodul des drahtlosen digitalen Signals in MUX-Dateninformationen; und
Senden durch das drahtlose Internetmodul der MUX-Dateninformationen zu dem UE.

3. Drahtloses Internetmodul (100), das konfiguriert ist, ein drahtloses Kommunikationsverfahren nach einem der Ansprüche 1-2 auszuführen.

4. Drahtloses Internetmodul (100) nach Anspruch 3, das Folgendes umfasst:
ein Schnittstellenuntermodul für eine sichere digitale Speicherkarte, SD-Karten-Schnittstellenuntermodul, (101) und ein drahtloses Internetverarbeitungsuntermodul (102), wobei das drahtlose Internetverarbeitungsuntermodul (102) konfiguriert ist, Informationen mit dem Anwendergerät, UE, über das SD-Karten-Schnittstellenuntermodul (101) als die SD-Karten-Schnittstelle auszutauschen;
wobei das drahtlose Internetverarbeitungsuntermodul (102) eine Antenne (201), eine Hochfrequenz-Verarbeitungseinheit, RF-Verarbeitungseinheit, (202), eine Teilnehmeridentitätsmodul-Einheit, SIM-Einheit, (203) und eine Basisbandverarbeitungseinheit (204) umfasst;
wobei die Antenne (201) konfiguriert ist, ein empfangenes Funksignal zu der RF-Verarbeitungseinheit (202) zu senden oder ein Signal, das durch die RF-Verarbeitungseinheit (202) gesendet wird, in eine elektromagnetische Welle umzusetzen und die elektromagnetische Welle zu senden;
die RF-Verarbeitungseinheit (202) konfiguriert ist, Frequenzauswahl, Verstärkung und Abwärtsumsetzung auf dem durch die Antenne (201) empfangenen Funksignal auszuführen und dadurch das Funksignal in ein Basisbandsignal umzusetzen und das Signal zu der Basisbandverarbeitungseinheit (204) zu senden; oder die RF-Verarbeitungseinheit (202) konfiguriert ist, Aufwärtsumsetzung und Verstärkung auf einem Basisbandsignal, das durch die Basisbandverarbeitungseinheit (204) gesendet wird, auszuführen und das Signal über die Antenne (201) zu senden;
die SIM-Einheit (203) konfiguriert ist, Anwenderparameterinformationen zu speichern;
wobei
die Basisbandverarbeitungseinheit (204) konfiguriert ist, das Verfahren nach Anspruch 1 auszuführen.

5. Drahtloses Internetmodul (100) nach Anspruch 4, wobei:
eine Größe des drahtlosen Internetmoduls (100) dieselbe ist wie eine Größe einer SD-Karte.

6. Drahtloses Internetmodul (100) nach Anspruch 4, wobei das drahtlose Internetverarbeitungsuntermodul (102) ferner Folgendes umfasst:
eine Speichereinheit (206), die konfiguriert ist, das Sendenetzpaket, das durch die Basisbandverarbeitungseinheit (204) empfangen wird, und eine Anwendung, die zum Betrieb des drahtlosen Internetmoduls (100) erforderlich ist, zu speichern.

7. Drahtloses Internetmodul (100) nach Anspruch 6, wobei das drahtlose Internetverarbeitungsuntermodul (102) ferner Folgendes umfasst:
eine Stromversorgungsmanagementeinheit (205), die konfiguriert ist, die Versorgungsspannung des UE in eine Spannung umzusetzen, die für die Basisbandverarbeitungseinheit (204), die Speichereinheit (206), die RF-Verarbeitungseinheit (202) und die SIM-Einheit (203) erforderlich ist, um derartige Einheiten mit Strom zu versorgen.

8. Drahtloses Internetmodul (100) nach Anspruch 4, wobei:
die Antenne (201) in einer Hauptplatine des drahtlosen Internetmoduls (100) eingesetzt ist oder die Antenne (201) mit der RF-Verarbeitungseinheit (202) über einen Hauptplatinenkontakt des drahtlosen Internetmoduls (100) verbunden ist.

9. Drahtloses Internetmodul (100) nach einem der Ansprüche 4 bis 8, wobei:
das SD-Karten-Schnittstellenuntermodul (101) Folgendes umfasst: ein Schnittstellenuntermodul für einen sicheren digitalen Eingang und Ausgang, SDIO-Schnittstellenuntermodul, oder ein Untermodul für eine serielle Peripherieschnittstelle, SPI-Untermodul.

10. Anwendergerät, UE, wobei
das UE das drahtlose Internetmodul nach einem der Ansprüche 3 bis 9 umfasst.

11. UE nach Anspruch 10, wobei:
das drahtlose Internetmodul (100) in einem Steckplatz für eine sichere digitale Speicherkarte, SD-Karten-Steckplatz, des UE oder in einem Steckplatz für eine sichere digitale Mikro-Speicherkarte, MicroSD-Steckplatz, eingesetzt ist.

## Revendications

1. Procédé de communication sans fil comprenant :
la réception, par un module Internet sans fil configuré de façon à établir une connexion sans fil à Internet, d'informations de données Multiplex, MUX, ces informations de données MUX, comprenant au moins soit une commande de contrôle de transmission, soit un paquet de réseau de transmission, étant envoyées par un équipement utilisateur, EU, par l'intermédiaire d'une interface à carte mémoire Secure Digital, carte SD, (étape 501) ;
la détermination, par le module Internet sans fil, de si les informations de données MUX contiennent la commande de contrôle de la transmission et/ou le paquet du réseau de transmission ;
lorsqu'il est déterminé que les informations de données MUX contiennent la commande de contrôle de la transmission, l'envoi, par le module Internet sans fil, de la commande de contrôle de la transmission par l'intermédiaire d'une interface de commande de contrôle de la transmission adaptée de façon à servir d'interface avec une unité adaptée de façon à exécuter une commande pour le contrôle de la transmission (étape 503) ; et
lorsqu'il est déterminé que les informations de données MUX contiennent le paquet du réseau de transmission, l'envoi, par le module Internet sans fil, du paquet du réseau de transmission par l'intermédiaire d'une interface de paquet de réseau de transmission adaptée de façon à servir d'interface avec un réseau (étape 504).

2. Procédé de communication sans fil selon la revendication 1, comprenant en outre :
la réception, par le module Internet sans fil, d'un signal numérique sans fil ;
l'encapsulation, par le module Internet sans fil, du signal numérique sans fil en des informations de données MUX ; et
l'envoi, par le module Internet sans fil, des informations de données MUX à l'EU.

3. Module Internet sans fil (100), configuré de façon à exécuter un procédé de communication sans fil selon l'une quelconque des revendications 1 et 2.

4. Module Internet sans fil (100) selon la revendication 3, comprenant :
un sous-module d'interface à carte mémoire Secure Digital, carte SD, (101) et un sous-module de traitement Internet sans fil (102), ce sous-module de traitement Internet sans fil (102) étant configuré de façon à échanger des informations avec l'équipement utilisateur, EU, par l'intermédiaire du sous-module d'interface à carte SD (101) étant l'interface à carte SD.
le sous-module de traitement Internet sans fil (102) comprenant une antenne (201), une unité de traitement à radiofréquence, RF, (202), une unité module d'identification de l'abonné, MIA, (203), et une unité de traitement de la bande de base (204) ;
l'antenne (201) étant configurée de façon à transmettre un signal radio reçu à l'unité de traitement RF (202), ou à convertir un signal transmis par l'unité de traitement RF (202) en une onde électromagnétique et à envoyer cette onde électromagnétique ;
l'unité de traitement RF (202) étant configurée de façon à effectuer une sélection de fréquence, une amplification et une conversion descendante sur le signal radio reçu par l'antenne (201), convertissant ainsi le signal radio en un signal dans la bande de base, et à envoyer ce signal à l'unité de traitement de la bande de base (204) ; ou
l'unité de traitement RF (202) étant configurée de façon à effectuer une conversion ascendante et une amplification sur un signal dans la bande de base envoyé par l'unité de traitement de la bande de base (204), et à envoyer ce signal par l'intermédiaire de l'antenne (201) ;
l'unité MIA (203) étant configurée de façon à stocker des informations sur les paramètres de l'utilisateur ;
l'unité de traitement de la bande de base (204) étant configurée de façon à exécuter le procédé selon la revendication 1.

5. Module Internet sans fil (100) selon la revendication 4, dans lequel :
une taille de module Internet sans fil (100) est la même qu'une taille d'une carte SD.

6. Module Internet sans fil (100) selon la revendication 4, dans lequel le sous-module de traitement Internet sans fil (102) comprend en outre :
une unité de stockage (206), configurée de façon à stocker le paquet du réseau de transmission obtenu par l'unité de traitement de la bande de base (204) et une application nécessaire pour faire fonctionner le module Internet sans fil (100).

7. Module Internet sans fil (100) selon la revendication 6, dans lequel le sous-module de traitement Internet sans fil (102) comprend en outre :
une unité de gestion d'alimentation électrique (205), configurée de façon à convertir la tension d'alimentation de l'EU en une tension requise par l'unité de traitement de la bande de base (204), l'unité de stockage (206), l'unité de traitement RF (202), et l'unité MIA (203) pour alimenter du courant électrique à ces unités.

8. Module Internet sans fil (100) selon la revendication 4, dans lequel :
l'antenne (201) est établie dans une carte mère du module Internet sans fil (100), ou
l'antenne (201) est connectée à l'unité de traitement RF (202) par l'intermédiaire d'un contact de carte mère du module Internet sans fil (100).

9. Module Internet sans fil (100) selon l'une quelconque des revendications 4 à 8, dans lequel ;
le sous-module d'interface à carte SD (101) consiste en : un sous-module d'interface d'entrée et de sortie Secure Digital, SDIO, ou un sous-module d'interface périphérique en série (SPI).

10. Équipement utilisateur, EU,
cet EU comprenant un module Internet sans fil selon l'une quelconque des revendications 3 à 9.

11. EU selon la revendication 10, dans lequel :
le module Internet sans fil (100) est établi dans un emplacement pour carte mémoire Secure Digital, carte SD, de l'EU, ou dans un emplacement pour carte mémoire Secure Digital Micro, MicroSD.
